# EUROPÄISCHE PATENTSCHRIFT

(11) **EP 3 987 755 B1**
(45) Veröffentlichungstag und Bekanntmachung des Hinweises auf die Patenterteilung: **17.05.2023**
(21) Anmeldenummer: 20733602.5
(22) Anmeldetag: 17.06.2020
(51) Int. Cl.: H04M 1/02

(54) **AUFNAHMEVORRICHTUNG ZUM BEFESTIGEN EINES MOBILEN ENDGERÄTS AN EINEM MODUL**
HOLDER DEVICE FOR FASTENING A MOBILE TERMINAL TO A MODULE
DISPOSITIF DE RÉCEPTION SERVANT À FIXER UN TERMINAL MOBILE SUR UN MODULE

(30) Priorität: 18.06.2019 DE 102019208810
(43) Veröffentlichungstag der Anmeldung: 27.04.2022
(73) Patentinhaber: Robert Bosch GmbH, 70442 Stuttgart (DE)
(72) Erfinder: DU, Yonggang, 60438 Frankfurt a.M. (DE)
(86) Internationale Anmeldenummer: PCT/EP2020/066769
(87) Internationale Veröffentlichungsnummer: WO 2020/254410

(56) Entgegenhaltungen:
- CN-A- 107 040 630

## Beschreibung

### Stand der Technik

Die Erfindung betrifft eine Aufnahmevorrichtung zum Befestigen eines mobilen Endgeräts an einem Modul nach Anspruch 1 und ein System nach Anspruch 6.

Ein auf einem Fahrrad festmontiertes Modul für intelligentes Radfahren mit normalen Fahrrädern oder Elektrofahrrädern wird von einer Batterie im Fall eines normalen Fahrrads oder von dem Akku eines Elektrofahrrads mit Spannung versorgt. Weiterhin kann ein mobiles Endgerät, z. B. ein Smartphone oder ein Tablet, als Anzeige des Moduls mit Hilfe einer dafür speziell entwickelten Schutzhülle mit dem Modul mechanisch verbunden werden. Wenn ein mobiles Endgerät als Anzeige von dem Modul benutzt wird, besteht der Bedarf, das mobile Endgerät während der Fahrt mit Energie aus dem Modul drahtlos zu laden, um die Lebensdauer seines Akkus zu verlängern. Das kann so realisiert werden, indem das Smart Phone in eine speziell dafür entworfene Schutzhülle eingesteckt wird und die Schutzhülle durch eine mechanische Führung in das Modul eingeschoben wird. Zum drahtlosen Laden des Mobiles Endgeräts lässt sich ein standardisierter QI Transmitter samt Spule in die Schutzhülle einbauen, wobei die Schutzhülle einen elektrischen Kontakt zum Verbinden mit einem elektrischen Kontakt des Moduls zur Versorgung mit Betriebsspannung aufweist. Das oben beschriebene Konzept zum drahtlosen Laden von mobilen Endgeräten mit Energie aus dem Modul hat allerdings nur gute Energieübertragungseffizienz, wenn die Position der in die Schutzhülle eingebaute Spule des QI Transmitters mit der Position der in das mobile Endgerät eingebaute Spule des QI Empfängers zur Deckung des magnetischen Feldes kommt. Bei der Nutzung eines universellen Halters zur Festhaltung eines beliebigen mobilen Endgeräts an dem Modul, wird der Halter mittels einer mechanischen Struktur an dem Modul befestigt und bleibt fest montiert, auch wenn das mobile Endgerät aus dem Halter herausgenommen und für das Radfahren nicht mehr benutzt wird. Weiterhin hat der Halter mittig einen offenen Ausschnitt. Mit dem offenen Ausschnitt wird eine Materialreduktion bewirkt, die ein Laden eines gehaltenen mobilen Endgeräts begünstigt. Weiter kann der offene Ausschnitt, wenn das Modul eine eigene eingebaute Anzeige hat, eine freie Sicht auf die Anzeige erlauben, wenn kein mobiles Endgerät von dem Halter gehalten wird. Der Halter kann weiter einen Qi-Transmitter zum Übertragen von Energie auf einen Qi-Empfänger des mobilen Endgeräts aufweisen. Allerdings ist die Effizienz der Energieübertragung gering, da der Qi-Transmitter regelmäßig nicht deckungsgleich mit dem Qi-Empfänger des mobilen Endgeräts angeordnet ist. Eine ähnliche gattungsgemäße Aufnahmevorrichtung ist z.B. aus der CN 107 040 630 A bekannt.

Aufgabe der Erfindung ist es daher, eine Aufnahmevorrichtung mit einem Fensterbereich bereitzustellen, die eine verbesserte Effizienz beim Laden des Energiespeichers eines gehaltenen mobilen Endgeräts aufweist.

### Offenbarung der Erfindung

Hauptmerkmale der Erfindung sind in den Ansprüchen 1 und 6 angegeben. Ausgestaltungen sind Gegenstand der Ansprüche 2 bis 5 und 7 sowie der Beschreibung.

Aufnahmevorrichtung zum Befestigen eines mobilen Endgeräts an einem Modul mit Befestigungselementen zum Befestigen der Aufnahmevorrichtung, wobei das mobile Endgerät eine Ladespule zum kontaktlosen Laden eines Energiespeichers aufweist, wobei die Aufnahmevorrichtung einen Fensterbereich und einen Halterahmen zum Halten des mobilen Endgeräts und zum Befestigen an dem Modul aufweist, wobei der Halterahmen sich um den Fensterbereich erstreckt und der Fensterbereich durch ein gehaltenes mobiles Endgerät überdeckt ist, wenn die Aufnahmevorrichtung an dem Modul befestigt ist, dadurch gekennzeichnet, dass die Aufnahmevorrichtung eine Sendeeinheit zum Erzeugen einer resonanten induktiven Kopplung mit der Ladespule aufweist, wobei die Sendeeinheit mittels einer Sendespule eine zumindest teilweise durch den Fensterbereich hindurch wirkende resonante induktive Kopplung generiert.

Mit der Erfindung wird eine Sendespule bereitgestellt, die eine zumindest teilweise durch den Fensterbereich hindurch wirkende resonante induktive Kopplung bewirkt. Da eine Ladespule eines mobilen Endgeräts in der Aufnahmevorrichtung in der Regel am Fensterbereich angeordnet ist, wird durch eine zumindest teilweise durch den Fensterbereich hindurch wirkende resonante induktive Kopplung eine verbesserte Effizienz beim Laden des Energiespeichers des gehaltenen mobilen Endgeräts bewirkt. Die Sendespule kann dazu in dem Fensterbereich angeordnet sein, wenn ein mobiles Endgerät von der Aufnahmevorrichtung gehalten wird und/oder um den Fensterbereich angeordnet sein.

Gemäß der Erfindung ist die Sendespule auf einem separaten Halteelement angeordnet, wobei das Halteelement mit dem Halterahmen lösbar verbunden ist.

Mit dem separaten Halteelement kann die Sendespule so an dem Fensterbereich, der bei abwesendem mobilen Endgerät z. B. eine Durchsicht auf eine dahinterliegende Anzeige des Moduls oder z, B, den Durchgriff auf Bedienelemente des Moduls erlaubt, angeordnet werden, dass es eine resonante induktive Kopplung durch dem Fensterbereich bewirkt. Wenn ein mobiles Endgerät von der Aufnahmevorrichtung gehalten wird, verdeckt das mobile Endgerät die Durchsicht durch den Fensterbereich, so dass das Halteelement die Sendespule in dem Fensterbereich anordnen kann, so dass die Sendespule eine zumindest teilweise durch den Fensterbereich hindurch wirkende resonante induktive Kopplung bewirken kann. Dies erlaubt auf Grund des nicht vorhandenen Materials im Fensterbereich eine effizientere Ladung des mobilen Endgeräts.

Gemäß der Erfindung ist das Halteelement lösbar mit der Aufnahmevorrichtung verbunden und erstreckt sich in einem verbundenen Zustand von dem Halterahmen in den Fensterbereich.

Das separate Halteelement kann damit je nach Bedarf an die Aufnahmevorrichtung gekoppelt werden oder von ihr gelöst werden. Gleichzeitig wird damit die Sendespule an die Aufnahmevorrichtung gekoppelt bzw. von ihr gelöst. Damit kann die Sendespule flexibel genutzt werden und bei abwesendem mobilen Endgerät aus dem Fensterbereich entfernt werden.

Weiter kann der Halterahmen ein erstes elektrisches Verbindungselement aufweisen, wobei das Halteelement ein zweites elektrisches Verbindungselement zum Verbinden mit dem ersten elektrischen Verbindungselement umfasst.

Damit wird automatisch eine elektrische Verbindung zwischen der Sendespule des separaten Halteelements und der Haltevorrichtung, das elektrische mit dem Modul verbunden sein kann, bereitgestellt, wenn das Halteelement mit dem Halterahmen der Aufnahmevorrichtung verbunden wird.

In einem weiteren alternativen oder zusätzlichen Beispiel des Halteelements können das Halteelement und die Sendespule einen eingerollten Zustand und einen ausgerollten Zustand aufweisen und sich in einem ausgerollten Zustand von der Sendeeinheit über den Fensterbereich erstrecken.

Die Sendespule und das Halteelement sind dabei dauerhaft mit dem Halterahmen verbunden. Im eingerollten Zustand geben die Sendespule und das Halteelement den Fensterbereich frei. Im ausgerollten Zustand sind die Sendespule und das Halteelement im Fensterbereich angeordnet, so dass die Sendespule eine zumindest teilweise durch den Fensterbereich hindurch wirkende resonante induktive Kopplung bewirken kann.

Dabei kann der Halterrahmen ein Verriegelungselement zum lösbaren Verriegeln des Halteelements in dem ausgerollten Zustand aufweisen.

Das Halteelement kann damit im ausgerollten Zustand an dem Halterahmen mittels des Verriegelungselements verriegelt werden. Dabei können das Halteelement und die Sendespule nach dem Lösen der Verriegelung automatisch in den eingerollten Zustand übergehen und den Fensterbereich nach dem Lösen der Verriegelung automatisch frei geben. Dazu kann ein Federelement vorgesehen sein, dass das Halteelement mit der Sendespule in den eingerollten Zustand treibt.

Weiter kann das Verriegelungselement eine Öse sein und das Halteelement einen Haken zum Verbinden mit der Öse aufweisen.

Damit wird ein einfach zu bedienendes Verriegelungselement bereitgestellt.

In einem weiteren Beispiel der Aufnahmevorrichtung kann die Sendespule im Halterahmen integriert sein, wobei die Sendespule eine Vielzahl von Wicklungen aufweist, die sich um den Fensterbereich erstrecken.

Dabei ist die Sendespule dauerhaft in dem Halterahmen angeordnet und um den Fensterbereich gewickelt. Dadurch bewirkt die Sendespule eine zumindest teilweise durch den Fensterbereich hindurch wirkende resonante induktive Kopplung. Ein Adaptieren der Haltevorrichtung, um eine gehaltenes mobiles Endgerät zu Laden wird damit vermieden.

System umfassend eine Aufnahmevorrichtung nach einem der vorhergehenden Ansprüche und einem Modul, wobei die Aufnahmevorrichtung mit dem Modul verbunden ist und der Fensterbereich über dem Modul angeordnet ist.

Vorteile und Wirkungen sowie Weiterbildungen des Systems ergeben sich aus den Vorteilen und Wirkungen sowie Weiterbildungen der oben beschriebenen Haltevorrichtung. Es wird daher in dieser Hinsicht auf die vorangegangene Beschreibung verwiesen.

Die Aufnahmevorrichtung lösbar mit dem Modul verbunden sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a, b: eine schematische Darstellung eines Systems und einer Steuervorrichtung;
- Fig. 2: eine schematische Darstellung eines separaten Halteelements;
- Fig. 3a, b: eine schematische Darstellung eines rollbaren Halteelements; und
- Fig. 4: eine schematische Darstellung einer um den Fensterbereich gewickelten Sendespule.

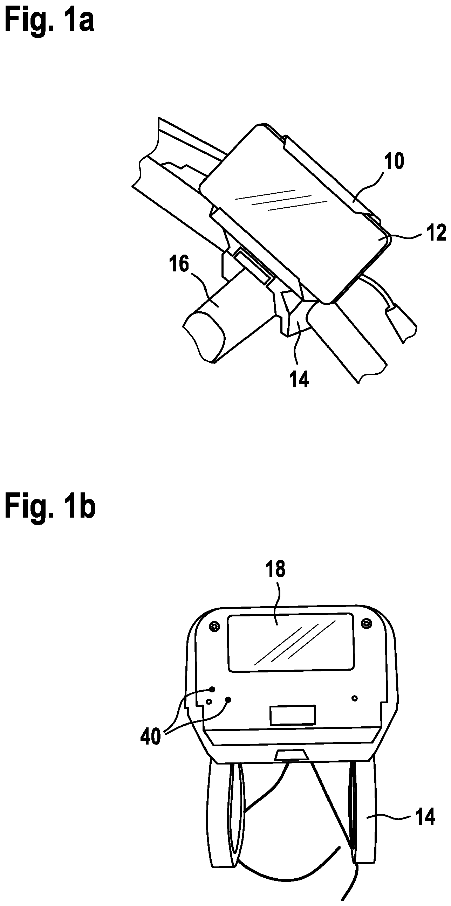

Figur 1a zeigt eine Aufnahmevorrichtung 10 und ein Modul 14 mit Befestigungselementen zum Befestigen der Aufnahmevorrichtung, das an einem Lenker 16 eines Fahrrads befestigt ist. Das Modul 14 kann zum Beispiel ein Steuergerät sein. Die Aufnahmevorrichtung 10 hält ein mobiles Endgerät 12 in Form eines Smartphones. Die Aufnahmevorrichtung 10 ist mittels einer mechanischen Struktur an dem Modul 14 befestigt werden und bleibt fest montiert, auch wenn das mobile Endgerät 12 aus der Aufnahmevorrichtung 10 herausgenommen und für das Radfahren nicht mehr benutzt wird. Die Aufnahmevorrichtung 10 kann dabei lösbar mit dem Modul 14 verbunden sein.

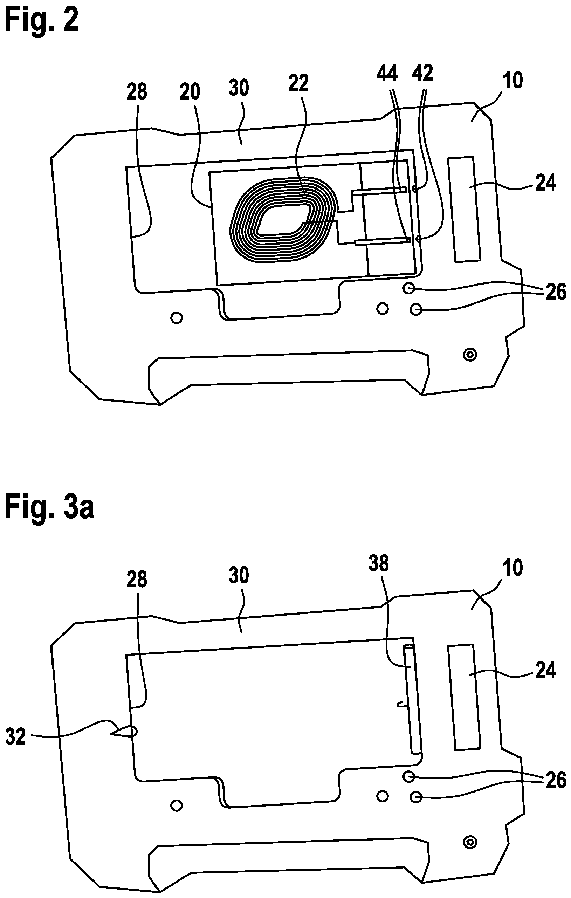

Weiterhin hat die Aufnahmevorrichtung 10 mittig einen offenen Fensterbereich 28, der von einem Halterahmen 30 begrenzt wird, die in den Figuren 2 bis 4 dargestellt sind. Dieser Fensterbereich 28 ist weiter vorteilhaft, wenn das Modul 14 eine eigene eingebaute Anzeige 18, wie in Figur 1b dargestellt, oder Bedienelemente hat. Die eingebaute Anzeige 18 wird nur dann zur Informationsausgabe benutzt, wenn sich das mobile Endgerät 12 nicht in der Aufnahmevorrichtung 10 befindet. Nachdem das mobile Endgerät 12 in die Aufnahmevorrichtung 10 eingesteckt worden ist, lassen sich die Ausgabeinformationen automatisch oder manuell auf einem Bildschirm des mobilen Endgeräts 12 darstellen. Das fehlende Material im Fensterbereich 28 begünstigt die resonante induktive Kopplung durch den Fensterbereich 28.

Die Aufnahmevorrichtung 10 kann ein universeller Halter zur Festhaltung verschiedener mobiler Endgeräte sein.

Die Steuervorrichtung 14 weist weiter elektrische Kontakte 40 auf, die zum Bereitstellen von elektrischer Spannung dienen. Diese elektrischen Kontakt 40 können mit der Haltervorrichtung 10 verbunden werden, so dass die Aufnahmevorrichtung 10 mittels einer Sendespule ein kontaktloses Laden eines gehaltenen mobilen Endgeräts 12 bewirken kann.

Gemäß Figur 2 ist eine Sendeeinheit 24 zum Erzeugen einer resonanten induktiven Kopplung in die Aufnahmevorrichtung 10 eingebaut, z.B. entlang der rechten Kante zu den beiden elektrischen Kontakten 26 der Haltervorrichtung 10. Die Sendeeinheit 24 kann z. B. ein QI Transmitter sein.

Eine Sendespule 22 der Sendeeinheit 24 wird auf einem separaten Halteelement 20, das ein externer dünner Kunststoffträger mit Schutzmaßnahme sein kann, montiert. Die Aufnahmevorrichtung 10 weist dabei ein erstes elektrisches Verbindungselement 42 auf und das Halteelement 20 weist ein zweites elektrisches Verbindungselement 44 auf, das zwei elektrisch leitende Steckstifte aufweisen kann.

Mittels des zweiten elektrischen Verbindungselement 44 kann das Halteelement 20 in das erste elektrische Verbindungselement 42 des Halterrahmens 30 eingesteckt werden. Das zweite elektrische Verbindungselement 44 auch als elektrische Verbindung zwischen der Sendespule 22 und der Sendeeinheit 24. Befindet sich ein mobiles Endgerät 12 nicht in der Aufnahmevorrichtung 10, wird kein drahtloses Laden benötigt. Dann kann das separate Halteelement 20 aus der Aufnahmevorrichtung 10 herausgenommen werden. Der Nutzer kann dann durch den Fensterbereich 28 der Aufnahmevorrichtung 10 die eingebaute Anzeige 18 des Moduls 14 sehen. Soll das mobile Endgerät 12 als Anzeige benutzt werden, wird das separate Halteelement 20 mit der Sendespule 22 in die Aufnahmevorrichtung 10 eingesteckt und danach das mobile Endgerät 12 in die Aufnahmevorrichtung 10 gelegt. Die Sendeeinheit 24 bekommt die Betriebsspannung von den elektrischen Kontakten 26 der Aufnahmevorrichtung 10, die mit den elektrischen Kontakten 40 der Steuereinheit 14 verbunden sind.

Die Dimension des separaten Halteelements 20 für die Sendespule 22 sowie die Position und Form der Sendespule 22 lassen sich so optimieren, dass die Energieübertragungseffizienz unter den mechanischen Randbedingungen für die Aufnahmevorrichtung 10 optimiert werden.

Das weitere Beispiel der Aufnahmevorrichtung gemäß Figur 3a beruht sich auf einer rollbaren Sendespule 22, die komplett in die Aufnahmevorrichtung 10 eingebaut wird. Dabei ist beispielhaft ein Einbaubereich für die rollbare Sendespule 22, die in diesem Beispiel rechts zum offenen Ausschnitt der Aufnahmevorrichtung 10 angeordnet ist. An einem im Einbaubereich der Aufnahmevorrichtung 10 fest montierten Rollzylinder 38 wird das eine Ende der rollbaren Sendespule 22 fixiert.

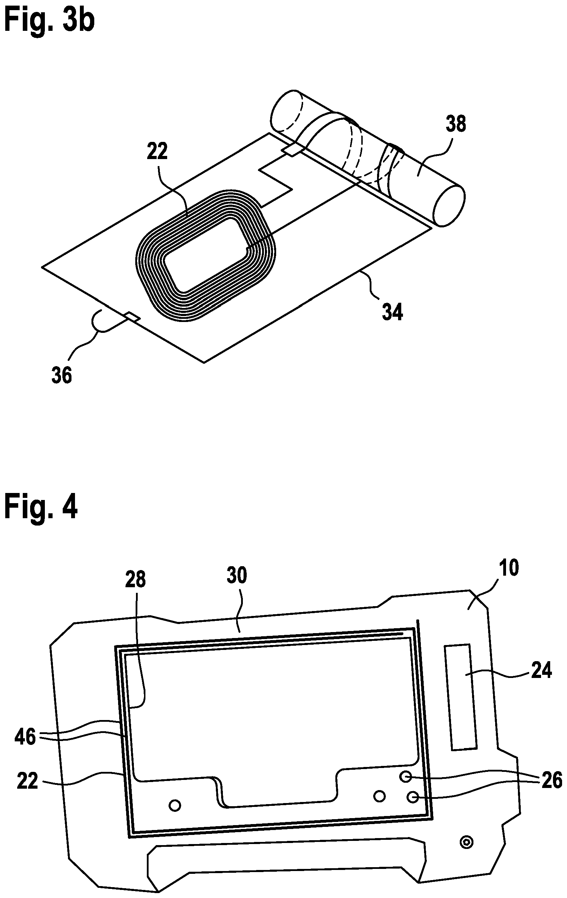

Figur 3b zeigt den ausgerollten Zustand einer rollbaren Sendespule 22, die elastisch ist und ohne Zugkraft in den gerollten Zustand zurückgeht. Weiterhin wird die Sendespule 22 an dem Rollzylinder 38 elektrisch mit der in der Aufnahmevorrichtung 10 eingebetteten Sendeeinheit 24 verbunden. Der Rollzylinder 38 kann dabei an einer kurzen oder langen Seite des Halterahmens 30 angebracht werden. Ebenfalls ist denkbar, dass der Rollzylinder 38 diagonal an einer Ecke des Halterahmens 30 angeordnet ist und diagonal über den Fensterbereich 28 ausgerollt werden kann.

Der Rollzylinder 38 kann ein flexibles Band 34 sein, auf dem eine flexible Spule als Sendespule 22 angeordnet ist.

Auf dem anderen Ende der Sendespule 22 befindet sich ein Haken 36 zur Festhaltung der Sendespule 22 im ausgezogenen Zustand. Ein Verriegelungselement 32, das z. B. die Form einer Öse aufweisen kann, ist zum Festhalten des Haken 36 der rollbaren Sendespule 22 festhalten soll, befindet sich auf der linken Kante zum Fensterbereich 28 der Aufnahmevorrichtung 10. Soll das mobile Endgerät 12 als Anzeige des Moduls 14 verwendet werden, wird die rollbare Sendespule 22 mit dem Haken 36 aus ihrem Einbaubereich des Halterahmens 30 herausgezogen und der Haken 36 wird von dem Verriegelungselement 32 festgehalten. Danach kann das mobile Endgerät in die Aufnahmevorrichtung 10 eingesteckt werden. Wird die eingebaute Anzeige 18 des Moduls 14 zur Informationsausgabe benutzt, muss der Haken 36 von dem Verriegelungselement 32 gelöst werden und die rollbare Sendespule 22 muss durch ihre elastische Kraft wieder in ihren Einbaubereich der Aufnahmevorrichtung 10 zurückgehen. Es sei bemerkt, dass die Festhaltung der rollbaren Sendespule 22 im ausgezogenen Zustand durch einen Haken 36 und einem Verriegelungselement 32 nur eine der vielen Realisierungsmöglichkeiten ist, die wegen ihrer Einfachheit hier als ein Ausführungsbeispiel betrachtet wird.

Bei einem weiteren Beispiel der Aufnahmevorrichtung 10 wird, wie in Figur 4 dargestellt, die Sendespule 22 der Sendeeinheit 24 mit einer Vielzahl von Wicklungen 46 entlang der Kanten des Fensterbereichs 28 der Aufnahmevorrichtung 10 gewickelt. Unter den Randbedingungen für den Fensterbereich 28 wird das mechanische Design des Fensterbereichs 28 so optimiert, dass die so gewickelte Sendespule 22 der Sendeeinheit 24 die maximale Energieübertragungseffizienz bei drahtlosem Laden von gängigen mobilen Endgeräten 12 resultiert. Die Sendeeinheit 24 ist nach wie vor in der Aufnahmevorrichtung 10 eingebettet und wird mit den beiden Enden der Wicklungen 46 elektrisch verbunden.

## Patentansprüche

1. Aufnahmevorrichtung zum Befestigen eines mobilen Endgeräts (12) an einem Modul (14) mit Befestigungselementen zum Befestigen der Aufnahmevorrichtung, wobei das mobile Endgerät (12) eine Ladespule zum kontaktlosen Laden eines Energiespeichers aufweist, wobei die Aufnahmevorrichtung (10) einen Fensterbereich (28) und einen Halterahmen (30) zum Halten des mobilen Endgeräts (12) und zum Befestigen an dem Modul (14) aufweist, wobei der Halterahmen (30) sich um den Fensterbereich (28) erstreckt und der Fensterbereich (28) durch ein gehaltenes mobiles Endgerät (12) überdeckt ist, wenn die Aufnahmevorrichtung (10) an dem Modul (14) befestigt ist, wobei die Aufnahmevorrichtung (10) eine Sendeeinheit (24) zum Erzeugen einer resonanten induktiven Kopplung mit der Ladespule aufweist, wobei die Sendeeinheit (24) mittels einer Sendespule (22) eine zumindest teilweise durch den Fensterbereich (28) hindurch wirkende resonante induktive Kopplung generiert, **dadurch gekennzeichnet, dass** die Sendespule (22) auf einem separaten Halteelement (20) angeordnet ist, wobei das Halteelement (20) mit dem Halterahmen (30) lösbar verbunden ist und sich in einem verbundenen Zustand von dem Halterahmen (30) in den Fensterbereich (28) erstreckt.

2. Aufnahmevorrichtung nach Anspruch 1, **dadurch gekennzeichnet, dass** der Halterahmen (30) ein erstes elektrisches Verbindungselement (42) aufweist, wobei das Halteelement (20) ein zweites elektrisches Verbindungselement (44) zum Verbinden mit dem ersten elektrischen Verbindungselement (42) umfasst.

3. Aufnahmevorrichtung nach Anspruch 1 oder 2, **dadurch gekennzeichnet, dass** das Halteelement (20) und die Sendespule (22) einen eingerollten Zustand und einen ausgerollten Zustand aufweisen und sich in einem ausgerollten Zustand von der Sendeeinheit (24) über den Fensterbereich (28) erstrecken.

4. Aufnahmevorrichtung nach Anspruch 3, **dadurch gekennzeichnet, dass** der Halterrahmen ein Verriegelungselement (32) zum lösbaren Verriegeln des Halteelements in dem ausgerollten Zustand aufweist.

5. Aufnahmevorrichtung nach Anspruch 4, **dadurch gekennzeichnet, dass** das Verriegelungselement (32) eine Öse ist und das Halteelement (20) einen Haken (36) zum Verbinden mit der Öse aufweist.

6. System umfassend eine Aufnahmevorrichtung (10) nach einem der vorhergehenden Ansprüche und einem Modul (14) mit Befestigungselementen zum Befestigen der Aufnahmevorrichtung, wobei die Aufnahmevorrichtung (10) mit dem Modul (14) verbunden ist und der Fensterbereich (28) über dem Modul (14) angeordnet ist.

7. System nach Anspruch 6, **dadurch gekennzeichnet, dass** die Aufnahmevorrichtung (10) lösbar mit dem Modul (14) verbunden ist.

## Claims

1. Receptacle apparatus for mounting a mobile terminal (12) on a module (14) having mounting elements for mounting the receptacle apparatus, wherein the mobile terminal (12) has a charging coil for contactlessly charging an energy store, wherein the receptacle apparatus (10) has a window region (28) and a retaining frame (30) for retaining the mobile terminal (12) and for the purpose of mounting on the module (14), wherein the retaining frame (30) extends around the window region (28) and the window region (28) is covered by a retained mobile terminal (12) when the receptacle apparatus (10) is mounted on the module (14), wherein the receptacle apparatus (10) has a transmitting unit (24) for producing a resonant inductive coupling to the charging coil, wherein the transmitting unit (24) uses a transmitting coil (22) to generate a resonant inductive coupling that at least sometimes acts through the window region (28), **characterized in that** the transmitting coil (22) is arranged on a separate retaining element (20), wherein the retaining element (20) is detachably connected to the retaining frame (30) and, in a connected state, extends from the retaining frame (30) into the window region (28).

2. Receptacle apparatus according to Claim 1, **characterized in that** the retaining frame (30) has a first electrical connecting element (42), wherein the retaining element (20) comprises a second electrical connecting element (44) for connection to the first electrical connecting element (42).

3. Receptacle apparatus according to Claim 1 or 2, **characterized in that** the retaining element (20) and the transmitting coil (22) have a rolled-up state and an unrolled state and, in an unrolled state, extend from the transmitting unit (24) over the window region (28) .

4. Receptacle apparatus according to Claim 3, **characterized in that** the retaining frame has a locking element (32) for releasably locking the retaining element in the unrolled state.

5. Receptacle apparatus according to Claim 4, **characterized in that** the locking element (32) is a loop and the retaining element (20) has a hook (36) for connection to the loop.

6. System comprising a receptacle apparatus (10) according to one of the preceding claims and a module (14) having mounting elements for mounting the receptacle apparatus, wherein the receptacle apparatus (10) is connected to the module (14) and the window region (28) is arranged over the module (14).

7. System according to Claim 6, **characterized in that** the receptacle apparatus (10) is connected to the module (14) detachably.

## Revendications

1. Dispositif de réception destiné à fixer un terminal mobile (12) à un module (14), comprenant des éléments de fixation destinés à fixer le dispositif de réception, le terminal mobile (12) possédant une bobine de charge destinée à la charge sans fil d'un accumulateur d'énergie, le dispositif de réception (10) possédant une zone de fenêtre (28) et un cadre de maintien (30) destiné à maintenir le terminal mobile (12) et à la fixation au module (14), le cadre de maintien (30) s'étendant autour de la zone de fenêtre (28) et la zone de fenêtre (28) étant recouverte par un terminal mobile (12) maintenu lorsque le dispositif de réception (10) est fixé au module (14), le dispositif de réception (10) possédant une unité d'émission (24) destinée à produire un couplage inductif résonant avec la bobine de charge, l'unité d'émission (24) générant, au moyen d'une bobine d'émission (22), un couplage inductif résonant qui agit au moins partiellement à travers la zone de fenêtre (28), **caractérisé en ce que** la bobine d'émission (22) est disposée sur un élément de maintien (20) distinct, l'élément de maintien (20) étant relié de manière amovible au cadre de maintien (30) et, dans un état attaché, s'étendant du cadre de maintien (30) dans la zone de fenêtre (28).

2. Dispositif de réception selon la revendication 1, **caractérisé en ce que** le cadre de maintien (30) possède un premier élément de connexion (42) électrique, l'élément de maintien (20) comportant un deuxième élément de connexion (44) électrique destiné à être connecté au premier élément de connexion (42) électrique.

3. Dispositif de réception selon la revendication 1 ou 2, **caractérisé en ce que** l'élément de maintien (20) et la bobine d'émission (22) présentent un état enroulé et un état déroulé et, dans un état déroulé, s'étendent depuis l'unité d'émission (24) au-dessus de la zone de fenêtre (28).

4. Dispositif de réception selon la revendication 3, **caractérisé en ce que** le cadre de maintien possède un élément de verrouillage (32) destiné à verrouiller de manière amovible l'élément de maintien dans l'état déroulé.

5. Dispositif de réception selon la revendication 4, **caractérisé en ce que** l'élément de verrouillage (32) est un œillet et l'élément de maintien (20) possède un crochet (36) destiné à la liaison avec l'œillet.

6. Système comprenant un dispositif de réception (10) selon l'une des revendications précédentes et un module (14) comportant des éléments de fixation servant à fixer le dispositif de réception, le dispositif de réception (10) étant relié au module (14) et la zone de fenêtre (28) étant disposée au-dessus du module (14).

7. Système selon la revendication 6, **caractérisé en ce que** le dispositif de réception (10) est relié de manière amovible au module (14).
